# EUROPÄISCHE PATENTSCHRIFT

(11) **EP 2 659 097 B1**
(45) Veröffentlichungstag und Bekanntmachung des Hinweises auf die Patenterteilung: **29.07.2015**
(21) Anmeldenummer: 11793431.5
(22) Anmeldetag: 07.12.2011
(51) Int. Cl.: F01D 25/14, F02B 39/00, F02B 37/18, F01D 17/10

(54) **ABGASTURBOLADER MIT WASSERGEKÜHLTEM TURBINENGEHÄUSE MIT INTEGRIERTEM ELEKTRISCHEN WASTEGATE-STELLER**
EXHAUST-GAS TURBOCHARGER HAVING A WATER-COOLED TURBINE HOUSING WITH AN INTEGRATED ELECTRIC WASTEGATE ACTUATOR
TURBOCOMPRESSEUR À GAZ D'ÉCHAPPEMENT COMPORTANT UN CARTER DE TURBINE REFROIDI PAR EAU MUNI D'UN ACTIONNEUR ÉLECTRIQUE DE SOUPAPE DE DÉCHARGE INTÉGRÉ

(30) Priorität: 28.12.2010 DE 102010064233
(43) Veröffentlichungstag der Anmeldung: 06.11.2013
(73) Patentinhaber: Continental Automotive GmbH, 30165 Hannover (DE)
(72) Erfinder: BOGNER, Mathias, 93083 Obertraubling (DE); BÖNING, Ralf, 67829 Reiffelbach (DE); KÖMPEL, Ralph-Maurice, 68159 Mannheim (DE); HILLER, Marc, 67294 Morschheim (DE); HERFURTH, Roland, 93051 Regensburg (DE)
(86) Internationale Anmeldenummer: PCT/EP2011/071995
(87) Internationale Veröffentlichungsnummer: WO 2012/089459

(56) Entgegenhaltungen:
- EP-A2- 2 372 126
- DE-A1-102008 011 257
- DE-A1-102008 014 609
- DE-A1-102008 034 680
- DE-U1-202009 015 888
- FR-A1- 2 937 109

## Beschreibung

Die Erfindung betrifft einen Abgasturbolader, der mit einem sogenannten Wastegate ausgestattet ist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus Werkstoffen mit einem hohen Nickelanteil. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Je mehr die Motordrehzahl steigt, desto schneller dreht sich durch die antreibende Abgasmenge das Turbinenrad der Turbine und mit diesem auch die Welle des Abgasturboladers, auf welcher sich weiterhin das Verdichterrad des Verdichters befindet. Durch die schnellere Drehung der Welle und damit auch des Verdichterrades erhöht sich die Luftfördermenge des Verdichters. Dies führt zu einer wachsenden Abgasmenge des Motors und damit wiederum zu einem schnelleren Antreiben des Turbinenrades. Um die jeweils gegebenen mechanischen und thermischen Grenzen des Motors nicht zu überschreiten, ist eine Regelung des Abgasturboladers notwendig.

Eine derartige Regelung eines Abgasturboladers kann unter Verwendung eines Wastegates erfolgen, das auch als Bypassventil bezeichnet wird. Ein derartiges Wastegate weist eine mit dem Turbinengehäuse des Abgasturboladers verbundene Klappe auf, die bei Bedarf geöffnet werden kann, um in Abhängigkeit von der Öffnungsstellung der Klappe einen mehr oder weniger großen Teil des heißen Abgases an der Turbine vorbei direkt in den Auspuff des Fahrzeugs zu leiten. Dadurch wird ein weiteres Ansteigen der Turbinendrehzahl unterbunden.

Ein derartiges Wastegate unterliegt aufgrund seiner Position im heißen Abgasstrom einer hohen thermischen und mechanischen Belastung.

Es ist bereits bekannt, Wastegate-Klappen unter Verwendung eines pneumatischen Aktuators zu verstellen. Derartige pneumatische Aktuatoren werden oftmals auch als Druckdosen bezeichnet.

Bei neueren Anwendungen gibt es nun vermehrt Bestrebungen, die genannten pneumatischen Aktuatoren durch elektrische Aktuatoren zu ersetzen. Ein derartiger elektrischer Wastegate-Steller bietet im Vergleich zu einem pneumatischen Wastegate-Steller Vorteile. Dazu gehören eine hohe Stellgeschwindigkeit, eine gute Stellgenauigkeit und große Stellkräfte. Aufgrund dieser großen Stellkräfte wird ein festes Schließen der Wastegate-Klappe im zugehörigen Klappensitz gewährleistet. Ein elektrischer Wastegate-Steller weist aber auch Nachteile auf. Dazu gehören ein erhöhtes Gewicht, ein vergrößerter Bauraumbedarf und eine Eigenerwärmung. Insbesondere die thermische Auslegung eines elektrischen Wastegate-Stellers bereitet in der Praxis Probleme. Im Motorraum eines Kraftfahrzeugs herrschen Temperaturen von bis zu 140° C. Im unmittelbaren Umfeld eines Abgasturboladers können noch weit höhere Temperaturen auftreten. Im Betrieb eines elektrischen Wastegate-Stellers wird dieser durch den hindurchfließenden Strom zusätzlich erwärmt. Ein weiteres in der Praxis auftretendes Problem ist die Positionierung des jeweiligen Wastegate-Stellers.

In der Regel bildet das Wastegate einen Teil des Turbinengehäuses. Der Wastegate-Steller bzw. Aktuator ist hingegen in der Regel am Verdichtergehäuse oder an einem Halter am Verdichtergehäuse befestigt. Zwischen dem Turbinengehäuse und dem Verdichtergehäuse ist das Lagergehäuse angeordnet. Folglich sind bei bekannten Abgasturboladern der Wastegate-Steller und das Wastegate selbst durch eine vergleichsweise lange Toleranzkette miteinander verbunden.

Ein elektrischer Wastegate-Steller muss in Bezug auf seine Auslegung entsprechend stark gewählt werden, so dass er auch dann die geforderten Stellkräfte aufbringen kann, wenn er selbst sehr heiß ist, und er die auftretenden Lastzyklen bewältigen kann, ohne sich zu überhitzen. Des Weiteren müssen beim Zusammenbau in einem letzten Montageschritt durch eine geeignete Ausgleichsvorrichtung im Koppelelement bzw. durch einen geeigneten Montageprozess des Koppelelementes die aufsummierten Toleranzen ausgeglichen werden. Dies ist mit einem erheblichen Aufwand und damit auch mit erheblichen Kosten verbunden.

Aus der DE 10 2008 034 680 A1 ist ein Turbolader bekannt, welcher eine Kühlungseinrichtung aufweist, wobei der Turbolader außerdem eine oder mehrere Elektronikeinrichtungen umfasst. Die jeweilige Elektronikeinrichtung ist derart mit der Kühlungseinrichtung verbunden, dass sie mittels dieser kühlbar ist. Die Kühlungseinrichtung kühlt das Verdichtergehäuse, das Lagergehäuse und/oder das Turbinengehäuse. Bei der Elektronikeinrichtung kann es sich um eine elektrische Betätigungseinrichtung handeln, beispielsweise um eine Wastegate-Betätigungseinrichtung.

Aus der DE 10 2008 014 609 A1 ist ein Aktuator zum Betätigen eines Schaltelementes einer Verbrennungskraftmaschine mit einem elektromotorischen Stellantrieb, der über ein Getriebe auf das Schaltelement wirkt, bekannt. Das Schaltelement kann ein auf der Abgasseite eines Abgasturboladers angeordnetes Wastegateventil sein. Der Stellantrieb ist auf der Frischluftseite des Abgasturboladers angeordnet und über das Getriebe mit dem Wastegateventil auf der Abgasseite verbunden. Der Stellantrieb wirkt auf ein Ritzel, das mit einem ersten Zahnrad auf einer Zwischenwelle in Eingriff steht. Auf der Zwischenwelle ist drehstarr ein weiteres Zahnrad angeordnet, das wiederum mit einem Abtriebszahnrad in Eingriff steht, das auf einer Antriebswelle schwenkbar gelagert ist.

Die Aufgabe der Erfindung besteht darin, einen Abgasturbolader anzugeben, bei dem die oben genannte lange Toleranzkette vermieden wird und welcher ein günstiges Packaging und eine geringe Systemkomplexität aufweist.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass durch die Integration eines elektrischen Wastegate-Stellers in das wassergekühlte Turbinengehäuse eines Abgasturboladers die oben genannte lange Toleranzkette vermieden wird. Bei bekannten Abgasturboladern war aufgrund der dort herrschenden hohen Temperaturen eine Integration jeglicher Aktuatorik in ein Turbinengehäuse undenkbar. Durch die Wasserkühlung des Turbinengehäuses entsteht die Möglichkeit, einen elektrischen Wastegate-Steller im Turbinengehäuse anzuordnen, da sich durch die thermische Anbindung an den Wassermantel des Turbinengehäuses entstehende Wärme besser abtransportieren lässt als in dem Falle, dass der elektrische Wastegate-Steller frei im Abgasstrom angeordnet ist oder in das Verdichtergehäuse integriert ist.

Weitere vorteilhafte Eigenschaften der Erfindung ergeben sich aus deren nachfolgender beispielhafter Erläuterung anhand der Figuren. Es zeigt
- Figur 1: eine perspektivische Skizze eines Abgasturboladers mit einem wassergekühltem Turbinengehäuse und integriertem Wastegate-Steller,
- Figur 2: eine Skizze des Turbinengehäuses als Baugruppe des in der Figur 1 gezeigten Abgasturboladers,
- Figur 3: eine Skizze des Turbinengehäuses als Baugruppe des in der Figur 1 gezeigten Abgasturboladers ohne Deckel,
- Figur 4: eine Skizze eines bearbeiteten Fertigteils des Turbinengehäuses mit einer Aufnahme für einen elektrischen Wastegate-Steller und
- Figur 5: eine Schnittdarstellung, in welcher die Lagerung einer Wastegate-Spindel in einer Wastegate-Buchse veranschaulicht ist.

Nachfolgend wird ein Abgasturbolader beschrieben, der ein Turbinengehäuse aufweist und mit einem im Turbinengehäuse angeordneten Wastegate ausgestattet ist, wobei das Turbinengehäuse wassergekühlt ist und ein elektrischer Wastegate-Steller integrierter Bestandteil des Turbinengehäuses ist.

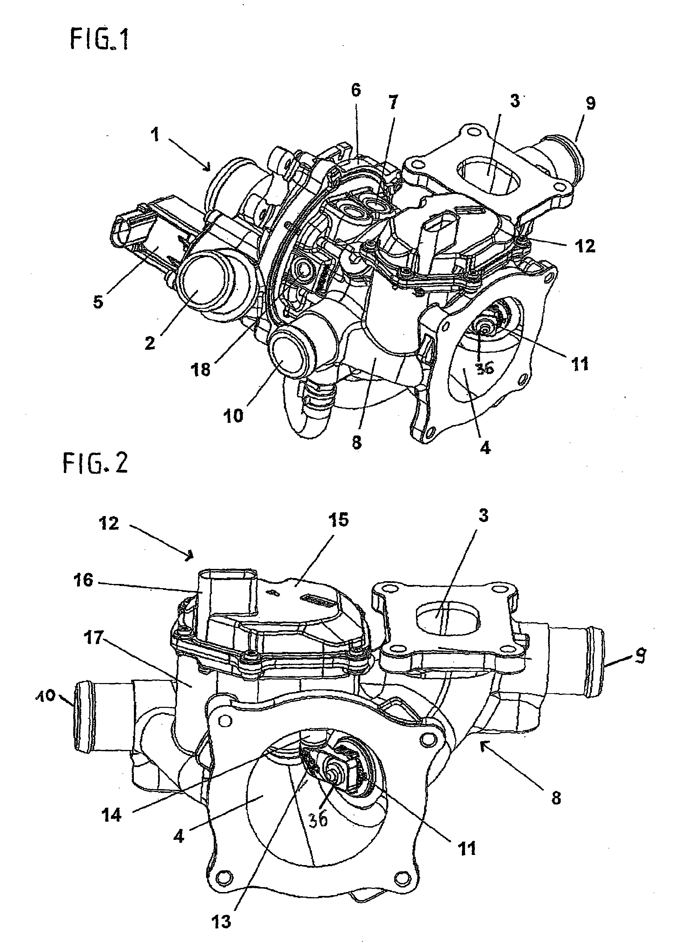

Die Figur 1 zeigt eine perspektivische Skizze zur Veranschaulichung eines Abgasturboladers, der ein wassergekühltes Turbinengehäuse aufweist, in welches ein elektrischer Wastegate-Steller integriert ist. In dieser Darstellung sind die wesentlichen Bauteile und Anschlüsse des Abgasturboladers gezeigt

Der dargestellte Abgasturbolader weist ein Verdichtergehäuse 6, ein Lagergehäuse 7 und ein wassergekühltes Turbinengehäuse 8 auf.

Im Verdichtergehäuse 6 ist in üblicher Weise ein auf einer gemeinsamen Welle angeordnetes Verdichterrad angeordnet. Im Turbinengehäuse 8 ist in üblicher Weise auf der gemeinsamen Welle ein Turbinenrad angeordnet. Die gemeinsame Welle ist im Lagergehäuse 7, welches zwischen dem Verdichtergehäuse 6 und dem Turbinengehäuse 8 positioniert ist, gelagert. Im Betrieb des Abgasturboladers wird das Turbinenrad über einen Abgasmassenstrom einer angeschlossenen Brennkraftmaschine angetrieben und treibt seinerseits über die gemeinsame Welle das Verdichterrad an. Der Verdichter verdichtet angesaugte Frischluft und führt diese der Brennkraftmaschine zu.

Das Verdichtergehäuse 6 weist einen Frischlufteinlass 1, durch welchen Frischluft aus der Umgebung in den Abgasturbolader eingesaugt wird, und einen Frischluftausgang 2 auf, durch welchen verdichtete Frischluft zur Weiterleitung an die Brennkraftmaschine ausgegeben wird. Des Weiteren ist das Verdichtergehäuse 6 mit einem Schubumluftventil 5 versehen. Dieses Schubumluftventil hat im Betrieb des Abgasturboladers die Aufgabe, im Falle eines negativen Lastsprungs einen Bypass um den Verdichter zu öffnen, so dass überschüssiger Ladedruck abgeblasen werden kann.

Das Lagergehäuse 7 weist einen Öleintritt 18 und einen nicht in der Figur dargestellten Ölaustritt auf. Durch den Öleintritt 18 tritt im Betrieb des Abgasturboladers Öl ein, das zur Schmierung der gemeinsamen Welle verwendet wird.

Das Turbinengehäuse 8 ist mit einem Wassereintritt 9 und einem Wasseraustritt 10 versehen. Im Betrieb des Abgasturboladers tritt durch den Wassereintritt 9 Kühlwasser ein, das durch im Inneren des Turbinengehäuses 8 verlaufende Kühlwasserkanäle geführt wird, und durch den Wasseraustritt 10 das Turbinengehäuse wieder verlässt. Durch dieses Kühlwasser wird das Turbinen-gehäuse 8, welches im Betrieb des Abgasturboladers aufgrund seiner Positionierung im heißen Abgasstrom hohen Temperaturen ausgesetzt ist, gekühlt.

Des Weiteren ist das Turbinengehäuse 8 mit einem Abgaseintritt 3 und einem Abgasaustritt 4 versehen. Der Abgaseintritt 3 ist mit einem Abgasausgang der Brennkraftmaschine verbunden, so dass durch den Abgaseintritt 3 das heiße Abgas der Brennkraftmaschine in den Innenbereich des Turbinengehäuses 8 gelangt. Dort treibt das heiße Abgas das im Turbinengehäuse angeordnete Turbinenrad an, welches wiederum über die gemeinsame Welle das im Verdichtergehäuse angeordnete Verdichterrad antreibt. Durch den Abgasaustritt 4, der mit dem Katalysator des Kraftfahrzeugs verbunden ist, tritt das Abgas wieder aus dem Turbinengehäuse 8 aus.

Zur Regelung der Leistung des Turbinenrades ist in das Turbinengehäuse 4 ein Wastegate 11 integriert. Dieses weist eine Klappe 36 auf, die mittels eines in das Turbinengehäuse integrierten elektrischen Wastegate-Stellers 12 je nach momentanem Bedarf mehr oder weniger weit geöffnet werden kann, um einen gewünschten Teil des heißen Abgases unter Umgehung des Tur-binenrades direkt dem Abgasaustritt 4 zuzuleiten.

Sowohl der genannte elektrische Wastegate-Steller 12 als auch dessen Koppelelement mit der Klappe 36 des Wastegates 11 sind mit den Kühlwasserkanälen des Turbinengehäuses thermisch gekoppelt, so dass auch diese Bauteile durch das Kühlwasser gekühlt werden.

Durch die Integration des elektrischen Wastegate-Stellers 12 in das Turbinengehäuse 8 wird die bei bekannten Abgasturboladern vorhandene lange Toleranzkette erheblich verkürzt. Dadurch entfällt die Notwendigkeit, geeignete Ausgleichsvorrichtungen im Koppelelement vorsehen zu müssen bzw. einen geeigneten Montageprozess des Koppelelementes zum Ausgleich von aufsummierten Toleranzen vornehmen zu müssen. Dies reduziert den beim Zusammenbau des Abgasturboladers notwendigen Aufwand und damit auch dessen Kosten.

Die Figur 2 zeigt eine Skizze des Turbinengehäuses 8 als Baugruppe des in der Figur 1 gezeigten Abgasturboladers. Aus dieser Figur 2 ist insbesondere ersichtlich, dass das Wastegate 11 eine Wastegate-Spindel 13 aufweist, an welcher die Wastegate-Klappe 36 befestigt ist. Diese Wastegate-Spindel 13 ist in einer Wastegate-Buchse 14 drehbar gelagert. Der elektrische Wastegate-Steller 12 ist in das wassergekühlte Turbinengehäuse 8 integriert und weist einen Deckel 15 auf, in welchen ein Stecker 16 integriert ist. Der Deckel 15 ist an einer Aufnahme für die Getriebestufen und einem Motorschacht 17 befestigt, wobei der Motorschacht zur Aufnahme eines Elektromotors vorgesehen ist.

Des Weiteren sind in der Figur 2 der Wassereintritt 9, der Wasseraustritt 10, der Abgaseintritt 3 und der Abgasaustritt 4 dargestellt.

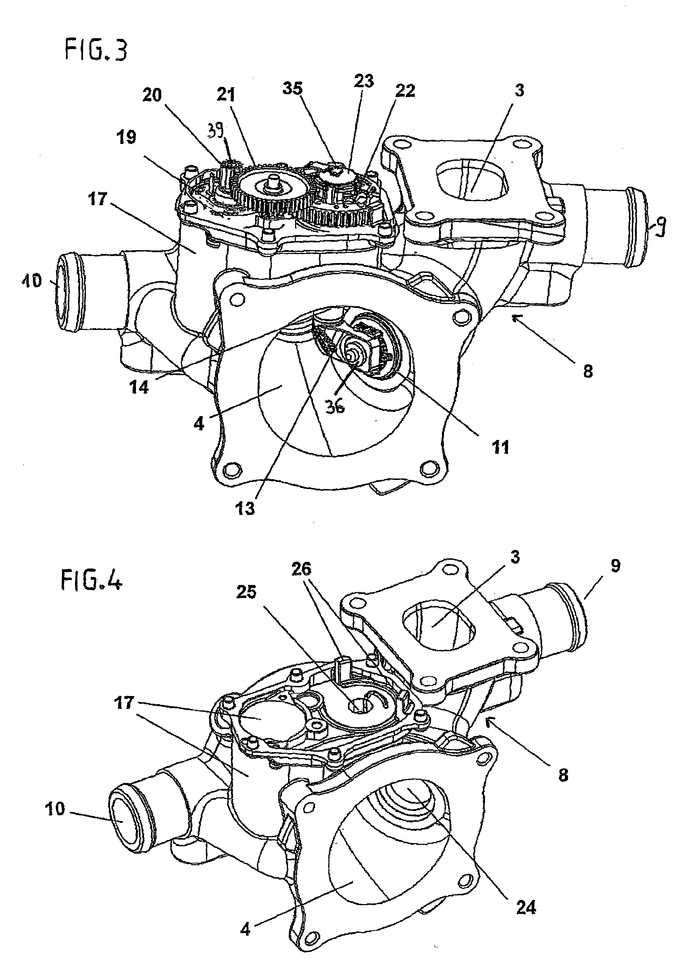

Die Figur 3 zeigt eine Skizze des Turbinengehäuses 8 als Baugruppe des in der Figur 1 gezeigten Abgasturboladers, bei der jedoch im Unterschied zur Figur 2 der Deckel 16 entfernt ist.

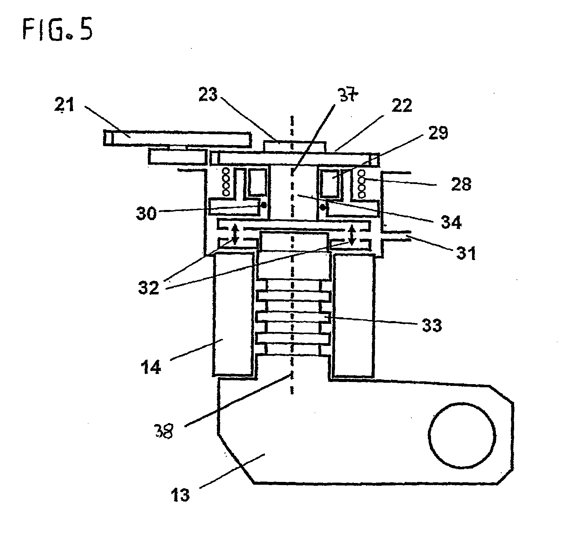

Aus der Figur 3 ist ersichtlich, dass der elektrische Wastegate-Steller 12 einen Elektromotor 19 aufweist, der ein Abtriebszahnrad 20 enthält, welches auf einer Abtriebswelle 39 des Elektromotors 19 angebracht ist. Dieser Elektromotor 19 ist in den Motorschacht 17 eingesteckt, welcher für ihn eine im wassergekühlten Turbinengehäuse vorgesehene Aufnahme bildet. Das vom Abtriebszahnrad 20 bereitgestellte Drehmoment wird an ein Zwischenzahnrad 21 übertragen. Dieses wiederum gibt die Drehbewegung weiter an ein Abtriebszahnrad 22, welches auf der Abtriebswelle 34 (siehe Figur 5) des elektrischen Wastegate-Stellers 12 angeordnet ist. An diesem Abtriebszahnrad 22 ist ein Magnet 23 befestigt, mit dessen Hilfe ein Sensor 35 die Winkelstellung der Abtriebswelle 34 ermitteln kann.

In dem in der Figur 3 gezeigten Ausführungsbeispiel ist ein Getriebe mit zwei Getriebestufen veranschaulicht. Gemäß weiterer, nicht in den Figuren dargestellter Ausführungsbeispiele kann ein in ein wassergekühltes Turbinengehäuse integrierter elektrischer Wastegate-Steller auch eine andere Anzahl von Getriebestufen aufweisen, beispielsweise eine Getriebestufe, drei Getriebestufen, vier Getriebestufen oder noch mehr Getriebestufen.

Die Figur 4 zeigt eine Skizze eines bearbeiteten Fertigteils des Turbinengehäuses 8 mit einer Aufnahme für einen integrierten elektrischen Wastegate-Steller. Aus dieser Darstellung ist der Wastegate-Kanal 24 ersichtlich, durch welchen die heißen Abgase der Brennkraftmaschine am Turbinenrad vorbeigeleitet werden. Des Weiteren ist in der Figur 4 der Motorschacht 17 dargestellt, der zur Aufnahme des Elektromotors des elektrischen Wastegate-Stellers vorgesehen ist. Ferner ist in der Figur 4 ein Schacht bzw. Kanal 25 gezeigt, der zur Aufnahme der Abtriebswelle 34 des elektrischen Wastegate-Stellers vorgesehen ist. Darüber hinaus sind in der Figur 4 die Endanschläge 26 gezeigt, die zur Begrenzung des Drehwinkels des Abtriebszahnrades 22 des Wastegate-Stellers dienen.

Die Figur 5 zeigt eine Schnittdarstellung, in welcher die Lagerung der in der Figur 3 gezeigten Wastegate-Spindel 13 in der Wastgate-Buchse 14 detaillierter veranschaulicht ist. Um ein günstiges Packaging und eine geringe Systemkomplexität zu erreichen und gewünschte Kühleffekte zu ermöglichen, liegen die Abtriebswelle 34 des elektrischen Wastegate-Stellers und die Welle der Wastegate-Spindel 13 auf einer gemeinsamen Achse, d. h. ihre Mittellinien 37 und 38 verlaufen in einer Flucht. Bei einer derartigen Anordnung des elektrischen Wastegate-Stellers steht der in der Figur 5 untere Endbereich der Wastegate-Spindel 13 im Betrieb im sehr heißen Abgasstrom des Kraftfahrzeugs. Im oberen Endbereich der in der Figur 5 gezeigten Anordnung befindet sich der Magnet 23, der zusammen mit dem in der Figur 3 gezeigten Sensor 35 zur Winkelpositionserfassung der Abtriebswelle 34 des elektrischen Wastegate-Stellers 12 dient. Des Weiteren sind in der Figur 5 das Zwischenzahnrad 21 und das mit der Abtriebswelle 34 verbundene Zahnrad 22 gezeigt.

Um sicherzustellen, dass im Betrieb weder der Magnet 23 noch der Sensor 35 noch der Elektromotor 19 des elektrischen Wastegate-Stellers 12 zu hohen Temperaturen ausgesetzt sind, weist die Wastegate-Spindel 13 Kühlrippen 33 auf. Des Weiteren ist die Abtriebswelle 34 des elektrischen Wastegate-Stellers 12 thermisch von der Wastegate-Spindel 13 entkoppelt. Dadurch wird in vorteilhafter Weise der Wärmefluss von der Wastegate-Spindel 13 zum elektrischen Wastegate-Steller 12 klein gehalten. Diese thermische Entkopplung wird beim gezeigten Ausführungsbeispiel dadurch realisiert, dass die Wastegate-Spindel 13 und die Abtriebswelle 34 des elektrischen Wastegate-Stellers zwei unterschiedliche Bauteile sind, die lediglich durch eine formschlüssige Verbindung 32 miteinander gekoppelt sind. Die Abtriebswelle 34 ist durch eine Lagerung 29 drehbar gelagert. Bei dieser Lagerung handelt es sich um ein Kugellager, ein Nadellager, ein Wälzlager, etc.. Zum genannten Kühlungseffekt trägt des Weiteren die bereits oben genannten thermische Kopplung des Wastegates und eines oder mehrerer Bauteile des Wastegate-Stellers an einen oder mehrere Kühlkanäle des Turbinengehäuses bei.

Um zu verhindern, dass in unerwünschter Weise Abgase in das Innere des elektrischen Wastegate-Stellers eindringen können, ist eine Dichtung 30 vorgesehen.

Ferner weist die in der Figur 5 gezeigte Vorrichtung eine Entlüftung 31 auf. Diese hat den Vorteil, dass evtl. auftretende geringe Mengen an Abgas nach außen entweichen können und nicht an der Dichtung 30 vorbei in das Innere des elektrischen Wastegate-Stellers gedrückt werden können. Um die Abtriebswelle 34 herum ist eine Drehfeder 28 vorgesehen, so dass eine Vorzugsbewegungsrichtung unterstützt wird.

## Patentansprüche

1. Abgasturbolader, der ein Turbinengehäuse (8) aufweist und mit einem im Turbinengehäuse angeordneten Wastegate (11) ausgestattet ist, wobei das Turbinengehäuse (8) wassergekühlt ist und ein elektrischer Wastegate-Steller (12) integrierter Bestandteil des Turbinengehäuses (8) ist, **dadurch gekennzeichnet, dass** das Turbinengehäuse einen zur Aufnahme eines Elektromotors (19) vorgesehenen Motorschacht (17) aufweist, der Elektromotor (19) ein Abtriebszahnrad (20) aufweist, welches über ein Zwischenzahnrad (21) auf ein auf einer Abtriebswelle (34) des elektrischen Wastegate-Stellers (12) angeordnetes weiteres Abtriebszahnrad (22) einwirkt, und die Abtriebswelle (34) des elektrischen Wastegate-Stellers (12) und eine Welle einer Wastegate-Spindel (13) des Wastegates (11) auf einer gemeinsamen Achse (37,38) liegen.

2. Abgasturbolader nach Anspruch 1, **dadurch gekennzeichnet, dass** das Turbinengehäuse (8) einen Wassereintritt (9), einen Wasseraustritt (10) und Kühlkanäle aufweist.

3. Abgasturbolader nach Anspruch 1 oder 2, **dadurch gekennzeichnet, dass** an der Wastegate-Spindel eine Wastegate-Klappe (36) befestigt ist.

4. Abgasturbolader nach Anspruch 3, **dadurch gekennzeichnet, dass** die Wastegate-Spindel (13) an einer Wastegate-Buchse (14) drehbar gelagert ist.

5. Abgasturbolader nach einem der vorhergehenden Ansprüche, **dadurch gekennzeichnet, dass** der Wastegate-Steller (12) einen Deckel (15) aufweist, in welchen ein Stecker (16) integriert ist.

6. Abgasturbolader nach Anspruch 5, **dadurch gekennzeichnet, dass** der Deckel an einer Aufnahme für die Getriebestufen und am Motorschacht (17) befestigt ist.

7. Abgasturbolader nach einem der vorangehenden Ansprüche, **dadurch gekennzeichnet, dass** am weiteren Abtriebszahnrad (22) ein Magnet (23) befestigt ist, der mit einem Sensor (35) zusammenwirkt, um die Winkelstellung der Abtriebswelle (34) des elektrischen Wastegate-Stellers (12) zu erfassen.

8. Abgasturbolader nach einem der Ansprüche 4 bis 7, **dadurch gekennzeichnet, dass** die Wastegate-Spindel (13) Kühlrippen aufweist.

9. Abgasturbolader nach einem der Ansprüche 4 bis 8, **dadurch gekennzeichnet, dass** die Wastegate-Spindel (13) von der Abtriebswelle (34) des elektrischen Wastegate-Stellers thermisch entkoppelt ist.

10. Abgasturbolader nach einem der vorangehenden Ansprüche, **dadurch gekennzeichnet, dass** die Wastegate-Spindel (13) und die Abtriebswelle (34) des elektrischen Wastegate-Stellers zwei unterschiedliche Bauteile sind, die durch eine formschlüssige Verbindung (32) miteinander gekoppelt sind.

## Claims

1. Exhaust-gas turbocharger which has a turbine housing (8) and which is equipped with a wastegate (11) which is arranged in the turbine housing, wherein the turbine housing (8) is water-cooled and an electric wastegate actuator (12) is an integrated constituent part of the turbine housing (8), **characterized in that** the turbine housing has a motor slot (17) which is provided for accommodating an electric motor (19), the electric motor (19) has a drive output gearwheel (20) which acts via an intermediate gearwheel (21) on a further drive output gearwheel (22) which is arranged on a drive output shaft (34) of the electric wastegate actuator (12), and the drive output shaft (34) of the electric wastegate actuator (12) and a shaft of a wastegate spindle (13) of the wastegate (11) lie on a common axis (37, 38).

2. Exhaust-gas turbocharger according to Claim 1, **characterized in that** the turbine housing (8) has a water inlet (9), a water outlet (10) and cooling ducts.

3. Exhaust-gas turbocharger according to Claim 1 or 2, **characterized in that** a wastegate flap (36) is fastened to the wastegate spindle.

4. Exhaust-gas turbocharger according to Claim 3, **characterized in that** the wastegate spindle (13) is rotatably mounted on a wastegate bushing (14).

5. Exhaust-gas turbocharger according to one of the preceding claims, **characterized in that** the wastegate actuator (12) has a cover (15) in which a plug (16) is integrated.

6. Exhaust-gas turbocharger according to Claim 5, **characterized in that** the cover is fastened to a receptacle for the gear stages and to the motor slot (17).

7. Exhaust-gas turbocharger according to one of the preceding claims, **characterized in that**, to the further drive output gearwheel (22), there is fastened a magnet (23) which interacts with a sensor (35) for the purpose of detecting the angular position of the drive output shaft (34) of the electric wastegate actuator (12).

8. Exhaust-gas turbocharger according to one of Claims 4 to 7, **characterized in that** the wastegate spindle (13) has cooling fins.

9. Exhaust-gas turbocharger according to one of Claims 4 to 8, **characterized in that** the wastegate spindle (13) is thermally decoupled from the drive output shaft (34) of the electric wastegate actuator.

10. Exhaust-gas turbocharger according to one of the preceding claims, **characterized in that** the wastegate spindle (13) and the drive output shaft (34) of the electric wastegate actuator are two different components which are coupled to one another by means of a positively locking connection (32).

## Revendications

1. Turbocompresseur à gaz d'échappement qui comprend un carter de turbine (8) et qui est muni d'une soupape de décharge (11) disposée dans le carter de turbine, le carter de turbine (8) étant refroidi par eau et un régulateur électrique de soupape de décharge (12) faisant partie intégrante du carter de turbine (8), **caractérisé en ce que** le carter de turbine comprend un compartiment moteur (17) prévu pour le logement d'un moteur électrique (19), le moteur électrique (19) comprend une roue dentée de sortie (20) qui agit, par l'intermédiaire d'une roue dentée intermédiaire (21) sur une roue dentée de sortie (22) supplémentaire disposée un arbre de sortie (34) du régulateur électrique de soupape de décharge (12) et l'arbre de sortie (34) du régulateur électrique de soupape de décharge (12) et un arbre d'une broche (13) de la soupape de décharge (11) se trouvent sur un axe commun (37, 38).

2. Turbocompresseur à gaz d'échappement selon la revendication 1, **caractérisé en ce que** le carter de turbine (8) comprend une admission d'eau (9), une évacuation d'eau (10) et des canaux de refroidissement.

3. Turbocompresseur à gaz d'échappement selon la revendication 1 ou 2, **caractérisé en ce qu'**un clapet de soupape de décharge (36) est fixé à la broche de la soupape de décharge.

4. Turbocompresseur à gaz d'échappement selon la revendication 3, **caractérisé en ce que** la broche de la soupape de décharge (13) est logée de manière rotative à un manchon de soupape de décharge (14).

5. Turbocompresseur à gaz d'échappement selon l'une des revendications précédentes, **caractérisé en ce que** le régulateur de soupape de décharge (12) comprend un couvercle (15), dans lequel est intégré un connecteur (16).

6. Turbocompresseur à gaz d'échappement selon la revendication 5, **caractérisé en ce que** le couvercle est fixé sur un logement pour les rapports de transmission et sur le compartiment moteur (17).

7. Turbocompresseur à gaz d'échappement selon l'une des revendications précédentes, **caractérisé en ce que**, sur la roue dentée de sortie (22) supplémentaire, est fixé un aimant (23) qui interagit avec un capteur (35) afin de détecter la position angulaire de l'arbre de sortie (34) du régulateur électrique de la soupape de décharge (12).

8. Turbocompresseur à gaz d'échappement selon l'une des revendications 4 à 7, **caractérisé en ce que** la broche de la soupape de décharge (13) présente des ailettes de refroidissement.

9. Turbocompresseur à gaz d'échappement selon l'une des revendications 4 à 8, **caractérisé en ce que** la broche de la soupape de décharge (13) est découplée thermiquement de l'arbre de sortie (34) du régulateur électrique de la soupape de décharge.

10. Turbocompresseur à gaz d'échappement selon l'une des revendications précédentes, **caractérisé en ce que** la broche de la soupape de décharge (13) et l'arbre de sortie (34) du régulateur électrique de la soupape de décharge sont deux composants distincts couplés entre eux au moyen d'une liaison par complémentarité de forme (32).
